# EUROPEAN PATENT APPLICATION

(11) **EP 2 953 373 A1**
(43) Date of publication of application: **09.12.2015**
(21) Application number: 14171533.4
(22) Date of filing: 06.06.2014
(51) Int. Cl.: H04N 21/438, H04H 20/26

(54) **Radio receiver and method of processing broadcasting signals in a broadcasting signal receiving device**

(71) Applicant: Alpine Electronics, Inc., Tokyo (JP)
(72) Inventor: Shimoda, Shinya, 70567 Stuttgart (DE)
(74) Representative: Klunker . Schmitt-Nilson . Hirsch

(57) **Abstract**

A radio receiver (1) comprises a broadcasting signal receiving device (2) comprising at least one tuner (21, 22) for receiving and tuning broadcasting signals (BS), an input device (6) configured to present a plurality of broadcasting stations (Station A-E) for selection to a user, wherein the input device (6) is configured to determine one of the presented broadcasting stations (Stations A-E) as a selected broadcasting station upon detecting a user input action on the input device (6), and to cause the at least one tuner (21, 22) to tune received broadcasting signals (BS) corresponding to the selected broadcasting station, and a terminal (64) for coupling to at least one component of a proximity sensor device (5) which is configured to detect an approaching of an object (7) towards the input device (6) and to associate a position of an approaching object (7) with respect to at least one of the presented broadcasting stations (Station C). The at least one tuner (21, 22) is configured to start tuning received broadcasting signals (BS) corresponding to one of the presented broadcasting stations (Station C) when the proximity sensor device (5) detects an approaching of an object (7) towards the input device (6) and associates a position of the approaching object (7) to the one of the presented broadcasting stations (Station C) and before the input device (6) detects a user input action on the input device (6).

## Description

The present invention is related to a radio receiver comprising a broadcasting signal receiving device comprising at least one tuner for receiving and tuning broadcasting signals, and to a method of processing broadcasting signals in a broadcasting signal receiving device.

There generally exist radio receivers that create a list of receivable broadcasting stations, so that the user can select an appropriate broadcasting station from the list of receivable broadcasting stations. For example, when installed in a vehicle, when the reception levels of a plurality of broadcasting stations of the broadcasting station list fall below a reference value, the receiver updates the broadcasting station list with broadcasting stations whose reception levels are equal to or greater than a reference value.

For example, such list of broadcasting stations may be displayed on a display device, such as installed in a head unit of a vehicle, so that the user can select a broadcasting station from the list. For instance, if the list of broadcasting stations is displayed on a touch screen, the user can select the broadcasting station from the list by touching a corresponding display icon on the display screen.

In a typical case, for example, such as in a digital radio receiver (operating according to Digital Audio Broadcasting, DAB), it will take two or three seconds to tune the broadcasting signals corresponding to the broadcasting station (ensemble) selected by the user. In case the user touches the broadcasting station listed in the displayed list, according to this example, there will be two or three seconds time period in which the user experiences a silence time for the tuning. This may be unsatisfactory for the user and distort the user's audio experience.

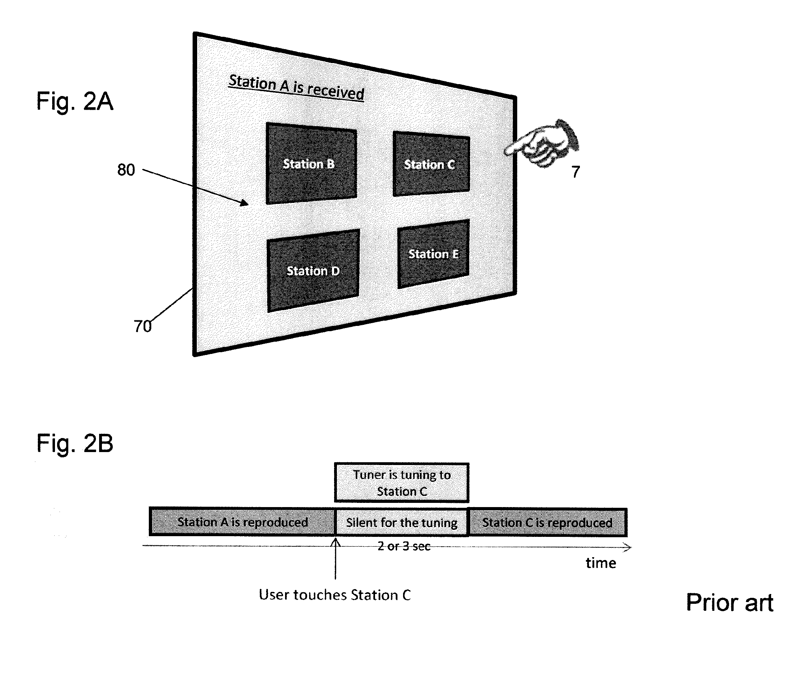

Such an example of a known radio receiver apparatus is illustrated in Fig. 2A and 2B. According to Fig. 2A, a broadcasting station list 80 generated by a radio receiver (not shown) is displayed on a display device 70. Currently, broadcasting signals of a broadcasting station A are received and output by a loudspeaker (not shown) coupled with the radio receiver. According to the time diagram shown in Fig. 2B, station A is reproduced by the loudspeaker until a time at which the user touches the display icon for station C. Upon detecting the user's touch (e.g., by a user's finger 7), the tuner is starting tuning to receive broadcasting signals corresponding to station C, wherein during that time period the user experiences a silent time for the tuning (here 2 or 3 seconds). After such silent time, when the tuner has finished tuning to station C, the broadcasting signals corresponding to station C are reproduced.

JP 2008-092230 A provides a broadcast receiver which shortens an undisplayable period in channel switching of digital broadcast, and also provides a decoding method of the broadcast receiver. The broadcast receiver includes an operation section which outputs operation signal of a channel, a tuner section which receives a digital broadcast signal of a specified channel and outputs a video/audio signal, a switch section which receives the video/audio signal from the tuner section and outputs the signal to a post stage according to a command signal, a decoder section which decodes and reproduces the video/audio signal from the switch section, and a control section which, when an operation signal for switching a first channel to a second channel is given from the operating section, turns off the switch section at a first timing of the channel switching, changes the channel of the tuner section into the second channel, and turns on the switch section at a second timing elapsed by a predetermined time from the first timing.

JP 2008-148061 A discloses a broadcast receiver in which, when a first reception processing part supplies a video signal and an audio signal to a program presentation device, an output signal generation instruction part, when a channel selected by a user is detected, makes a second reception processing part start generation of the video signal and the audio signal based on a digital broadcasting signal of the channel. Then, when the channel is decided after the output signal generation instruction part detects the channel, a switching control part switches a reception processing part which supplies the video signal and the audio signal to the program presentation part from the first reception processing part to the second reception processing part.

It is an object of the present invention to provide a radio receiver and a method of processing broadcasting signals which are capable of shortening a silent time period when the user gives instructions for switching between different broadcasting stations.

The present invention is related to a radio receiver and a method of processing broadcasting signals in a broadcasting signal receiving device according to the independent claims. According to an aspect of the invention, there is provided a radio receiver comprising a broadcasting signal receiving device comprising at least one tuner for receiving and tuning broadcasting signals, an input device configured to present a plurality of broadcasting stations for selection to a user, wherein the input device is configured to determine one of the presented broadcasting stations as a selected broadcasting station upon detecting a user input action on the input device, and to cause the at least one tuner to tune received broadcasting signals corresponding to the selected broadcasting station, and a terminal for coupling to at least one component of a proximity sensor device which is configured to detect an approaching of an object towards the input device and to associate a position of an approaching object with respect to at least one of the presented broadcasting stations. The at least one tuner is configured to start tuning received broadcasting signals corresponding to one of the presented broadcasting stations when the proximity sensor device detects an approaching of an object towards the input device and associates a position of the approaching object to the one of the presented broadcasting stations and before the input device detects a user input action on the input device.

According to another aspect, there is disclosed a method of processing broadcasting signals in a broadcasting signal receiving device comprising at least one tuner for receiving and tuning broadcasting signals, the method comprising the following steps: presenting on an input device a plurality of broadcasting stations, detecting with a proximity sensor device an approaching of an object towards the input device and associating a position of the approaching object to one of the presented broadcasting stations, starting tuning received broadcasting signals corresponding to the one of the presented broadcasting stations when detecting an approaching of the object towards the input device and associating a position of the approaching object to the one of the presented broadcasting stations by the proximity sensor device, subsequently determining one of the presented broadcasting stations as a selected broadcasting station upon detecting a user input action on the input device and tuning received broadcasting signals corresponding to the selected broadcasting station.

According to another aspect, the invention also relates to a vehicle comprising a radio receiver according to the invention.

The present invention makes it possible to shorten a silent time period when the user gives instructions to the radio receiver to switch to another broadcasting station presented on an input device. By means of coupling a component of a proximity sensor device with a radio receiver according to the invention, the radio receiver according to the invention can recognize that an object (e.g., a user's finger) is approaching. Additionally, the radio receiver can recognize the location at the input device where the user wants to select the broadcasting station. The tuner will start to tune the broadcasting station which will likely be selected by the user when approaching the input device with assuming the proximity sensor information just before the user actually touches the input device. As a result, the user can hear the desired broadcasting station with a shortened or even eliminated silent time period when switching from one broadcasting station to another broadcasting station.

According to an embodiment, the input device comprises a touch screen, and the step of determining comprises determining one of the presented broadcasting stations as a selected broadcasting station upon detecting a user's touch on the touch screen at a position corresponding to a position where the one of the presented broadcasting stations is displayed on the touch screen.

According to a further embodiment, the broadcasting signal receiving device comprises a buffer which is configured to store for a period of time signals corresponding to received broadcasting signals of at least one of the broadcasting stations currently tuned by the at least one tuner. In this way, a currently tuned broadcasting station can be listened to by the user because the audio content transmitted by that broadcasting station is remaining in the buffer and can be supplied to an output device while the tuner is switching to another broadcasting station.

According to an embodiment, the buffer is configured to provide the stored signals to an output device for outputting sound when and after the at least one tuner starts tuning received broadcasting signals corresponding to the one of the presented broadcasting stations.

According to a further embodiment, the broadcasting signal receiving device comprises a plurality of tuners, with each of them configured for receiving and tuning broadcasting signals.

For example, a first one of the tuners is configured to provide currently received broadcasting signals to an output device for outputting sound, and a second one of the tuners is configured to start tuning received broadcasting signals corresponding to the one of the presented broadcasting stations while the first one of the tuners provides currently received broadcasting signals to the output device.

According to an embodiment, the radio receiver further comprises a broadcasting station list creating device configured to create a broadcasting station list to be presented to the user, e.g. displayed to the user at the input device, wherein the broadcasting station list is representing broadcasting signals of broadcasting stations receivable by the broadcasting signal receiving device.

According to an embodiment, the input device comprises a touch screen device configured to display the plurality of broadcasting stations according to a created broadcasting station list and to determine one of the displayed broadcasting stations as a selected broadcasting station upon detecting a touch on the touch screen device at a position corresponding to the one of the displayed broadcasting stations.

According to an embodiment, the proximity sensor device comprises at least one camera based sensor.

According to a further embodiment, the proximity sensor device comprises at least one radiation emitting element and at least one radiation receiving element, wherein the at least one radiation receiving element is arranged to receive radiation emitted from the at least one radiation emitting element which is reflected from the object to be detected. This provides a quite cost efficient implementation of a proximity sensor device.

According to an embodiment, the radio receiver is an automotive radio receiver configured to be installed in a vehicle. For example, the input device is comprised in a head unit of the vehicle.

The embodiments as described above with respect to the radio receiver can equally be applied in connection with the method according to the invention.

Aspects and embodiments of the invention will now be described with reference to the drawings, in which:
- Fig. 1: shows a radio receiver for receiving broadcasting signals according to an exemplary embodiment of the invention,
- Fig. 2: shows an exemplary display of information on a display screen in the form of a broadcasting station list and a time diagram for switching between two broadcasting stations upon a user instruction, as currently available in the prior art,
- Fig. 3: shows a radio receiver with an exemplary broadcasting station list and a time diagram for switching between two broadcasting stations upon a user instruction according to an embodiment of the invention,
- Fig. 4: shows a schematic depiction of an embodiment of a component of a proximity sensor device which may be used in a system according to the invention.

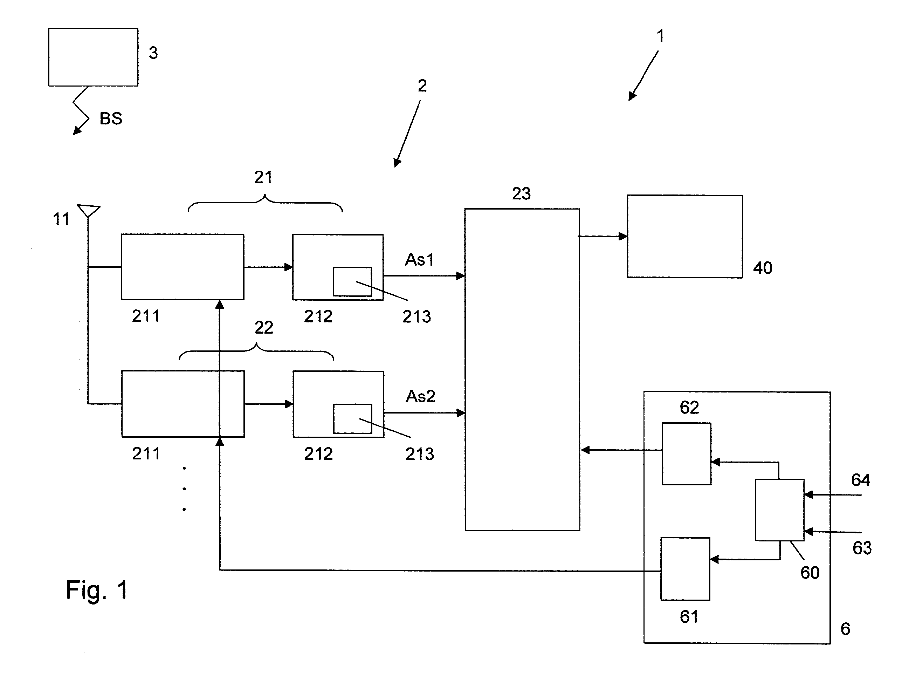

Fig. 1 shows a radio receiver for receiving broadcasting signals according to an exemplary embodiment of the invention in a schematic block diagram. In this embodiment, the radio receiver 1 is an automotive radio receiver, which may be installed in a vehicle, e.g., in a head unit thereof (not shown). It comprises a broadcasting signal receiving device 2 comprising at least one tuner (in the present embodiment, it comprises multiple tuners 21, 22, but only one tuner may be used as well) for receiving and tuning broadcasting signals BS. The broadcasting signals BS are broadcast from an exemplary broadcasting station 3. The broadcasting signal receiving device 2 may be a conventional receiving device as known in the art. The exemplary broadcasting signal receiving device 2 (another type thereof can also be used, e.g. when applied to another broadcasting technology) comprises an antenna 11 for receiving the broadcasting signals BS, and tuners 21, 22 connected in parallel to the antenna 11.

According to an embodiment, each of the tuners 21, 22 comprises a frontend device 211 and a backend device 212, as commonly known in digital receivers. The backend device 212 may include, according to an embodiment, a buffer 213 and a demodulator. The backend device 212 of each tuner 21, 22 provides an audio signal As1, As2, respectively (i.e., music or speech), corresponding to the received and tuned broadcasting signal BS to a switching device 23. The switching device 23 couples the received audio signal As1, As2 etc. for playback to a speaker or other output device 40.

It shall be understood that, as used herein, the expression "couple to" or "supply to" can be used to define either a direct or an indirect connection between elements. When it is referred herein to an installation of any part of the radio receiver in a vehicle, it should be understood that the radio receiver or any part thereof may also be installed in other installation locations where the radio receiver may be used.

Particularly, the backend device 212 may serve to demodulate the received broadcasting signals BS by a frequency determined by the station or frequency that is being tuned to. The demodulator included in the backend device 212 can be analog, digital, or a combination of the two. The output signal of the backend device can be received by a digital sound processor (DSP), which can extract and decode the audio portion of the received signal and send it to the output device 40.

According to a potential implementation, the respective frontend device 211 is forming the tuner 21 (or 22, respectively), whereas the backend device 212 and the switching device 23 are forming part of a DSP. According to another potential implementation, the respective frontend device 211 and backend device 212 are forming the tuner 21 (or 22), whereas the switching device 23 is forming part of a DSP. According to another potential implementation, the respective frontend device 211, backend device 212, and the switching device 23 are all forming part of tuner 21 (or 22).

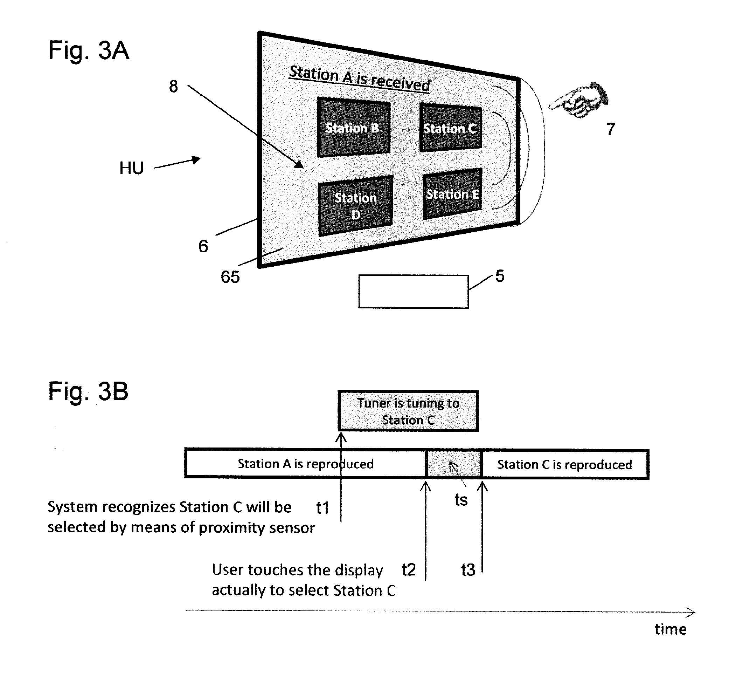

The radio receiver 1 further comprises a broadcasting station list creating device, which may, for example, be part of a DSP which implements the switching device 23, and which is configured to create a broadcasting station list 8 (such as shown in Fig. 3A) representing broadcasting signals of a plurality of broadcasting stations which are receivable by the broadcasting signal receiving device 2. The broadcasting station list creating device may be coupled to a display screen for displaying a broadcasting station list 8, such as shown in Fig. 3A. It should be noted that the broadcasting station list 8 may be created and presented in any suitable way, so that any of the broadcasting stations of such list may be appropriately selected by the user. For example, it may be sufficient that only two broadcasting stations of such list are displayed. The broadcasting stations of such list can be displayed, e.g., vertically one above the other, or horizontally one next to the other, or any combination thereof. The broadcasting stations may be displayed by a respective display icon, as shown in Fig. 3A, or in any other suitable way, for example, by simply displaying the station name or frequency on the display screen. A plurality of broadcasting stations may be presented to the user for selection also in any other suitable way, for example by means of respective buttons or knobs which may be actuated by the user for selecting a respective broadcasting station.

The radio receiver 1 further comprises an input device 6, which includes an HMI (human machine interface) module 60, for example implemented by appropriate hardware and/or software. For example, the input device 6 may be part of a head unit HU (Fig. 3A) of a vehicle. The input device 6 may comprise a touch screen device or other screen device 65, which is configured to present a plurality of broadcasting stations (e.g., stations A-E according to Fig. 3A) by display according to a created broadcasting station list 8, as shown in Fig. 3A. As such, the created broadcasting station list 8 is supplied to the screen device of the input device 6. For selecting a presented broadcasting station, the user may apply an input action 63 to the input device 6, e.g. by a touch on the screen device, by pressing a corresponding button, or by use of a rotating knob.

The input device 6 determines one of the presented broadcasting stations A-E as a selected broadcasting station upon detecting a user input action 63 on the input device 6 (in the present embodiment, upon detecting a touch on the touch screen device 65 at the corresponding position at which the broadcasting station is displayed). For example, when implementing a touch screen device, it determines one of the displayed broadcasting stations (e.g., station C) as a selected broadcasting station upon detecting a touch on the touch screen device at a position corresponding to this broadcasting station (i.e., station C). The input device 6, which may include an audio control module 62 (for example, implemented by appropriate hardware and/or software), then causes the switching device 23 to couple the audio signal As1 or As2 corresponding to the selected broadcasting station for audio output to the output device 40.

The radio receiver 1 further comprises a terminal 64 for coupling to at least one component of a proximity sensor device 5, an example of which is schematically shown in Fig. 3A. For example, such proximity sensor device 5 or part thereof may be placed adjacent to the radio receiver 1, for instance below and/or above the screen device 65 of the input device 6, thus forming a radio receiver system comprising the radio receiver 1 and the proximity sensor device 5. At terminal 64, the radio receiver 1 is coupled with at least one component of the proximity sensor device 5 for receiving a signal thereof, for example with a camera based sensor or infrared sensor. The proximity sensor device 5, which, for example, incorporates or communicates with a processor, such as a processor of a vehicle head unit or of the input device 6, has access to information regarding the arrangement and position of the presented broadcasting stations A-E on the input device 6. The proximity sensor device 5, for example a camera based sensor in cooperation with such processor, is configured to detect an approaching of an object (such as a user's finger 7 as shown in Fig. 3A) towards the input device 6 and to associate a position of the approaching object 7 with at least one of the presented broadcasting stations (for example, station C).

The input device 6, which may include a tuning control module 61 (for example, implemented by appropriate hardware and/or software), then causes at least one of the tuners 21, 22 to start tuning received broadcasting signals BS corresponding to one of the presented broadcasting stations (in the above example, station C) when the proximity sensor device 5 detects an approaching of the object 7 towards the input device 6 and associates a position of the approaching object 7 to this one of the presented broadcasting stations (here: Station C). This is done before the input device 6 detects a user input action on the input device 6, for example before the user is actually touching the corresponding display icon for station C on the display screen.

Fig. 3B shows a time diagram for switching between two broadcasting stations upon a user instruction according to an embodiment of the invention. Currently, broadcasting signals of station A are reproduced. At a time t1, the system (particularly, the proximity sensor device 5) recognizes that the object 7 is approaching the display icon for station C, so that the station C will likely be selected by the user. At this time t1, the radio receiver 1 starts tuning received broadcasting signals BS corresponding to station C when detecting an approaching of the object 7 towards the input device 6 and associating a position of the approaching object 7 to station C by the proximity sensor device 5. The currently reproduced station A is hearable because the audio contents thereof are stored in the buffer 213. At a time t2, the user touches the display icon for station C on the input device 6 to select the station C wherein tuning has almost finished. At a time t3, the station C is actually reproduced after the corresponding tuner 21, 22 has finished tuning to station C. As a result, there is a silent time ts (as a result of the tuning to station C) between t2 and t3 which is considerably reduced as compared to a silent time as shown in Fig. 2B according to the prior art.

By means of buffer 213 which is configured to store signals for a period of time corresponding to received broadcasting signals BS of at least one of the broadcasting stations currently tuned by the at least one tuner 21, 22, station A can still be reproduced for a time period between t1 and t2, even after the tuner has started tuning to the other broadcasting station C.

According to an embodiment in which the broadcasting signal receiving device 2 comprises a plurality of tuners 21, 22, a first one of the tuners (e.g., 21) may provide currently received broadcasting signals according to station A to output device 40 for outputting sound, whereas a second one of the tuners (e.g., 22) at time t1 starts tuning received broadcasting signals corresponding to station C while the first one of the tuners (e.g., 21) continues to provide currently received broadcasting signals according to station A to the output device 40.

According to this embodiment, if the system has two or more tuners, station C can be received with the second tuner while the first tuner is continuing to reproduce station A. This helps also when the user quits to tune to station C (e.g., when the user's finger 7 is approaching the input device 6, but is finally retracted and does not touch the display icon of station C), because there is no need to stop receiving station A until station C can be played.

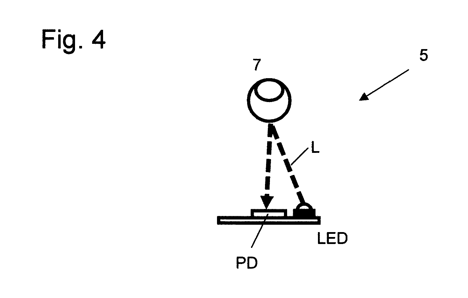

According to an embodiment, the proximity sensor device 5 may comprise at least one camera based sensor. According to further embodiment, as schematically shown in Fig. 4, the proximity sensor device 5 may comprise at least one radiation emitting element LED (e.g., a light emitting diode), which emits radiation L (for example, infrared light), and at least one radiation receiving element PD (e.g., a photo diode). The radiation receiving element PD is arranged to receive the radiation L emitted from the at least one radiation emitting element LED which is reflected from the object 7 to be detected. Such proximity sensor device may be implemented, for instance, along a line comprising a plurality of LEDs below and/or above the display screen of the input device 6.

## Claims

1. A radio receiver (1) comprising:
- a broadcasting signal receiving device (2) comprising at least one tuner (21, 22) for receiving and tuning broadcasting signals (BS),
- an input device (6) configured to present a plurality of broadcasting stations (Station A-E) for selection to a user,
- wherein the input device (6) is configured to determine one of the presented broadcasting stations (Stations A-E) as a selected broadcasting station upon detecting a user input action on the input device (6), and to cause the at least one tuner (21, 22) to tune received broadcasting signals (BS) corresponding to the selected broadcasting station,
- a terminal (64) for coupling to at least one component of a proximity sensor device (5) which is configured to detect an approaching of an object (7) towards the input device (6) and to associate a position of an approaching object (7) with respect to at least one of the presented broadcasting stations (Station C),
- wherein the at least one tuner (21, 22) is configured to start tuning received broadcasting signals (BS) corresponding to one of the presented broadcasting stations (Station C) when the proximity sensor device (5) detects an approaching of an object (7) towards the input device (6) and associates a position of the approaching object (7) to the one of the presented broadcasting stations (Station C) and before the input device (6) detects a user input action on the input device (6).

2. The radio receiver according to claim 1, wherein the broadcasting signal receiving device (2) comprises a buffer (213) which is configured to store signals for a period of time corresponding to received broadcasting signals (BS) of at least one of the broadcasting stations currently tuned by the at least one tuner (21, 22).

3. The radio receiver according to claim 2, wherein the buffer (213) is configured to provide the stored signals to an output device (40) for outputting sound when the at least one tuner (21, 22) starts tuning received broadcasting signals (BS) corresponding to the one of the presented broadcasting stations (Station C).

4. The radio receiver according to any of claims 1 to 3, wherein the broadcasting signal receiving device (2) comprises a plurality of tuners (21, 22), each configured for receiving and tuning broadcasting signals (BS).

5. The radio receiver according to claim 4, wherein
- a first one of the tuners (21) is configured to provide currently received broadcasting signals to an output device (40) for outputting sound, and
- a second one of the tuners (22) is configured to start tuning received broadcasting signals corresponding to the one of the presented broadcasting stations (Station C) while the first one of the tuners (21) provides currently received broadcasting signals to the output device (40).

6. The radio receiver according to any of claims 1 to 5, wherein the proximity sensor device (5) comprises at least one camera based sensor.

7. The radio receiver according to any of claims 1 to 6, wherein the proximity sensor device (5) comprises at least one radiation emitting element (LED) and at least one radiation receiving element (PD), wherein the at least one radiation receiving element (PD) is arranged to receive radiation (L) emitted from the at least one radiation emitting element (LED) which is reflected from the object (7) to be detected.

8. The radio receiver according to any of claims 1 to 7, further comprising a broadcasting station list creating device (23) configured to create a broadcasting station list (8) to be presented to the user, the broadcasting station list (8) representing broadcasting signals receivable by the broadcasting signal receiving device (2).

9. The radio receiver according to any of claims 1 to 8, wherein the radio receiver (1) is an automotive radio receiver configured to be installed in a vehicle.

10. The radio receiver according to claim 9, wherein the input device (6) is comprised in a head unit (HU) of the vehicle.

11. The radio receiver according to any of claims 1 to 10, wherein the input device comprises a touch screen device (65) configured to display the plurality of broadcasting stations (Stations A-E) according to a created broadcasting station list (8) and to determine one of the displayed broadcasting stations (Station C) as a selected broadcasting station upon detecting a touch on the touch screen device (65) at a position corresponding to the one of the displayed broadcasting stations (Station C).

12. A vehicle comprising a radio receiver according to any of the preceding claims.

13. A method of processing broadcasting signals in a broadcasting signal receiving device (2) comprising at least one tuner (21, 22) for receiving and tuning broadcasting signals (BS), the method comprising the following steps:
- presenting on an input device (6) a plurality of broadcasting stations (Stations A-E),
- detecting with a proximity sensor device (5) an approaching of an object (7) towards the input device (6) and associating a position of the approaching object (7) to one of the presented broadcasting stations (Station C),
- starting tuning received broadcasting signals corresponding to the one of the presented broadcasting stations (Station C) when detecting an approaching of the object (7) towards the input device (6) and associating a position of the approaching object (7) to the one of the presented broadcasting stations (Station C) by the proximity sensor device (5),
- subsequently determining one of the presented broadcasting stations (Stations A-E) as a selected broadcasting station upon detecting a user input action on the input device (6) and tuning received broadcasting signals (BS) corresponding to the selected broadcasting station.

14. The method according to claim 13, wherein the input device comprises a touch screen device (65), and the step of determining comprises determining one of the presented broadcasting stations (Stations A-E) as a selected broadcasting station upon detecting a user's touch on the touch screen device (65) at a position corresponding to a position where the one of the presented broadcasting stations is displayed on the touch screen device.
